# EUROPEAN PATENT APPLICATION

(11) **EP 4 663 373 A1**
(43) Date of publication of application: **17.12.2025**
(21) Application number: 24753111.4
(22) Date of filing: 22.01.2024
(51) Int. Cl.: B29C 43/20, B29C 51/08, B29C 65/70, B29C 70/42, B60B 5/02

(54) **METHOD FOR MANUFACTURING THERMOPLASTIC FIBER-REINFORCED RESIN WHEEL**

(30) Priority: 08.02.2023 JP 2023017351
(71) Applicant: Eleven International Co., Ltd., Matsubara-shi, Osaka, 580-0016 (JP)
(72) Inventor: ISOGAWA, Sachihiro, Inazawa-shi, Aichi 492-8425 (JP); SAITOU, Saori, Hashima-gun, Gifu 501-6016 (JP); ITAKURA, Tsuyoshi, Matsubara-shi, Osaka 580-0016 (JP)
(74) Representative: HKW Intellectual Property PartG mbB
(86) International application number: PCT/JP2024/001713
(87) International publication number: WO 2024/166665

(57) **Abstract**

A resin wheel in which a rim portion and a disc portion are integrated is manufactured with good formability in an extremely short time. In a manufacturing method of a resin wheel in which a material 11 made of a thermoplastic fiber-reinforced resin is formed with a mold 31, the temperature of the mold 31 is set to a temperature lower than a melting point of a resin matrix of the material 11. As the material 11, a billet-shaped material 11b and a sheet-shaped material 11a are prepared, and heated to a temperature higher than the melting point of the resin matrix. The heated billet-shaped material 11b is held in the mold 31 surrounded by a disc outer surface mold 32 and a rim outer diameter mold 33, and the sheet-shaped material 11a is held on a surface of the rim outer diameter mold 33 on a punch mold 34 side. While the punch mold 34 is lowered and the sheet-shaped material 11a is subjected to deep draw forming to form the rim portion of the wheel, a part of the sheet-shaped material 11a is pressed against the billet-shaped material 11b to join both materials, and the billet-shaped material 11b is subjected to compression forming to form the disc portion of the wheel.

## Description

### TECHNICAL FIELD

The present invention relates to a manufacturing method for forming an automobile wheel in which a rim portion and a disc portion are integrated using a thermoplastic fiber-reinforced resin.

### BACKGROUND ART

An automobile wheel having a structure in which a rim portion and a disc portion are integrated is basically molded after all or a part of a material, that is, a fiber-reinforced resin (for example, fiber reinforced plastics (FRP) or sheet molding compound (SMC)) or a fiber base material is held along an inner surface of a mold. However, since the rim portion and the disc portion having different shapes and directionalities are integrated in the wheel, at least a plurality of materials constituting these portions need to have different shapes and be disposed at different positions.

The wheel disclosed in Patent Literature 1 below is made of a thermosetting resin, and is manufactured as follows. That is, a sheet-shaped resin molding material (SMC) having a large amount of resin is used as a material constituting the rim portion, and is formed into a cylindrical shape and held inside the rim forming mold. A sheet-shaped resin molding material (SMC) having a high fiber volume ratio is used as a material constituting the disc portion, and this material is accommodated between a lower mold and an upper mold for forming the disc portion. In this example, a cylindrical material constituting the rim portion is wound around the outer periphery of the material constituting the disc portion to form a processing resin material.

The processing resin material is charged into a heated mold, and then subjected to compression forming processing (heat and cool forming). When a resin matrix of the material is heated for a predetermined time to be solidified by a chemical reaction and then cooled, forming is completed.

Since the wheel is manufactured in this manner, it takes time to, in manufacturing the wheel, appropriately dispose and shape the material in the mold and to cure the resin, and it is impossible to perform forming processing including the preparation stage that is completed in several minutes.

A technique for forming a sheet material of not a thermosetting fiber-reinforced resin but a thermoplastic fiber-reinforced resin at high speed is disclosed in Non Patent Literature 1. This is intended to ensure sufficient formability while shortening the cycle time, and a method is adopted in which the sheet material is heated to a temperature higher than the melting point of the resin matrix, and then sandwiched and formed by a mold set at a temperature lower than the melting point of the resin matrix. Manufacture of a wheel using a thermoplastic fiber-reinforced resin is disclosed in Non Patent Literature 2. This method uses, as a material, a thermoplastic fiber-reinforced resin obtained by using a chopped material as a reinforced fiber, heated to a predetermined processing temperature, introduced into a mold, and then subjected to compression forming.

In this method, a punch is pressed into a material to compress and form a disc portion, and a part of the material is thereby extruded in a tubular shape to form a rim portion. Since the diameter of the rim portion increases at an upper position, a larger volume of the material is required to secure the thickness of the rim portion. For this purpose, it is necessary to increase the volume on the disc portion side more than necessary. In addition, when the rim width is wide, the punch needs to be pushed deeper and strongly, so that the formation load rapidly increases. Furthermore, since the rim portion is formed by being extruded and raised, the reinforced fibers are easily arranged in a specific direction. That is, since the anisotropy increases and high strength cannot be obtained, it is difficult to form a wheel having a wide rim portion. In other words, even if the reinforced fibers are isotropic at a stage of the material before formation, the anisotropy increases as the reinforced fibers flow above the rim portion, which easily causes a variation or a decrease in strength in the axial direction. Therefore, the width of the rim portion is limited.

In order to reduce the anisotropy, it is conceivable to slow the forming speed to slow the flow speed of the reinforced fibers, but the forming time becomes long, and the resin temperature during formation rapidly decreases to inhibit formability. As described above, in the technique of Non Patent Literature 1, although it seems that forming can be performed in a short time by one compression operation, it is difficult to balance the forming speed and the formed product performance and to satisfy both of their requirements, and there are also restrictions on the product shape.

In addition to forming by quick form as in Non Patent Literature 2, there is also a technique called high pressure resin transfer molding (HP-RTM) forming (for example, Patent Literature 2).

In this forming method, for example, a dry fiber substrate not impregnated with a resin, or a laminated body of fiber substrates is manually disposed in a forming mold and is shaped, and then the inside of the mold is decompressed after clamping of the forming mold and a thermosetting resin such as an epoxy resin is injected under pressure to impregnate the fiber base material. Thereafter, the mold is heated to cure the thermosetting resin. Since a plurality of fiber base materials are prepared depending on the application site and are disposed by manual work, there is an advantage that the strength of the wheel can be secured by increasing the number of laminated fiber base materials at the position to be reinforced.

However, it takes time to dispose and shape the fiber base material, and a high degree of know-how is required to obtain a homogeneous product.

For this reason, a considerable time that cannot be obtained at a minute level is required for the work before molding and for the molding, and the wheel thus manufactured is very expensive and can be used only for some special vehicles such as a supercar.

### CITATION LIST

### PATENT LITERATURE

Patent Literature 1: JP H06-51308 B
Patent Literature 2: JP 6652523 B2

### Non Patent Literature

Non Patent Literature 1: Sachihiro Isogawa, Yoshio Enomoto, Hisao Kobayashi, Shougo Nasu, "High cycle deep drawing of PA6 matrix carbon fiber reinforced thermoplastics by servo-driven screw press", "Procedia Manufacturing", Available online 11 August 2018, Version of Record 11 August 2018., Volume 15, p.1722-1729
Non Patent Literature 2: "CFRTP Automobile Tire Wheel", Rapiit Corporation, product catalog, [searched on October 3, 2022], Internet <URL: https://www.ipros.jp/catalog/detail/498804>

### SUMMARY OF INVENTION

### TECHNICAL PROBLEM

A main object of the present invention is to make it possible to manufacture a wheel made of thermoplastic fiber-reinforced resin with good formability in a short time, and to manufacture a wheel that can secure mechanical performance and has a wide rim portion.

### SOLUTION TO PROBLEM

The solution is to provide a thermoplastic fiber-reinforced resin wheel manufacturing method in which a material made of a thermoplastic fiber-reinforced resin is formed with a mold to manufacture a wheel in which a rim portion and a disc portion are integrated, the thermoplastic fiber-reinforced resin wheel manufacturing method including, setting the mold to a temperature lower than a melting point of a resin matrix which is a constituent element of the material, heating a billet-shaped material and a sheet-shaped material as the material to a temperature higher than the melting point of the resin matrix which is the constituent element of the material, and then holding the billet-shaped material in the mold surrounded by a disc outer surface mold and a rim outer diameter mold, holding the sheet-shaped material on a surface on a side of a punch mold opposite to the disc outer surface mold in the rim outer diameter mold, and pressing an outer peripheral portion of the sheet-shaped material with a wrinkle suppression plate, performing deep draw forming for the sheet-shaped material with the punch mold and the rim outer diameter mold to form a rim portion of the wheel, pressing a part of the sheet-shaped material against the billet-shaped material to join both materials, and performing compression forming for the billet-shaped material with the disc outer surface mold, the rim outer diameter mold, and the punch mold to form a disc portion of the wheel.

In this configuration, the sheet-shaped material and the billet-shaped material having different shapes are plastically deformed in a low-stress manner matching their shapes, and are joined and integrated with each other simultaneously with the plastic deformation. Deep draw forming of the sheet-shaped material enables the formation of a wide rim portion, and compression forming of the billet-shaped material eliminates the need for forming a rim portion, thus eliminating the need for excessive volume and formation load. In addition, the sheet-shaped material and the billet-shaped material heated to a temperature higher than the melting point of the resin matrix are plastically deformed in a predetermined shape quickly in a mold having a predetermined temperature lower than the melting point of the resin matrix, and the temperatures of the sheet-shaped material and the billet-shaped material decrease.

### ADVANTAGEOUS EFFECTS OF INVENTION

According to the present invention, since the deep draw forming of the sheet-shaped material and the compression forming of the billet-shaped material are organically combined, and the rim portion and the disc portion are easily formed by a series of operations and joined and integrated, the wheel can be formed at a minute level in a very short time and the formability is good. Moreover, the forming of each material is performed in a relatively low-stress manner matching the shape of the material. Therefore, it is easy to control the flow of the material at the time of forming the rim portion and the disc portion, and the mechanical performance can be secured by suppressing the reinforced fibers from excessively enhancing the anisotropy. In addition, since the rim portion is constituted by deep draw forming of the sheet-shaped material, a wide rim portion can also be formed.

### BRIEF DESCRIPTION OF DRAWINGS

FIG. 1 is a schematic configuration diagram of a method for manufacturing a thermoplastic fiber-reinforced resin wheel.
FIG. 2 is a front view of wheels and a cross-sectional view thereof taken along line A-A.
FIG. 3 is a perspective view of a sheet-shaped material and a billet-shaped material.
FIG. 4 is a plan view illustrating a structure of a continuous fiber laminate pseudo isotropic cloth sheet.
FIG. 5 is a one-sided cross-sectional view of the billet-shaped material.
FIG. 6 is a cross-sectional view illustrating a structure of a mold.
FIG. 7 is a cross-sectional view of a state in which a material is held in the mold.
FIG. 8 is a cross-sectional view illustrating a molding process.
FIG. 9 is a cross-sectional view of a molding state.
FIG. 10 is another example of a cross-sectional view illustrating a molding state for reinforcing or the like a rim portion.
FIG. 11 is a perspective view illustrating a state before and after molding of a material in which an additional sheet-shaped material is laminated.
FIG. 12 is another example of a one-sided cross-sectional view of a billet-shaped material including a reinforcing sheet.
FIG. 13 is a plan view of a billet-shaped material including a reinforcing sheet.
FIG. 14 is a cross-sectional view illustrating a molding state using a reinforcing sheet.
FIG. 15 is a front view of a formed product including a reinforcing sheet.
FIG. 16 is a front view of a wheel including a reinforcing sheet.

### DESCRIPTIO OF EMBDOIMENTS

An embodiment for carrying out the present invention will be described below with reference to the drawings.

The present invention is for manufacturing an automobile wheel in which a rim portion and a disc portion are integrated by mold forming (hereinafter, referred to as "wheel"), and a thermoplastic fiber-reinforced resin is used as a forming material (intermediate base material).

The thermoplastic fiber-reinforced resin is a sheet molding compound (SMC) which is called a forged carbon sheet, a forged carbon fiber sheet, or the like; a bulk molding compound (BMC); a fiber reinforced plastic (FRP) such as carbon fiber reinforced plastic; a stampable sheet, or the like and is mainly composed of a resin matrix (base material) and a reinforced fiber (reinforced material).

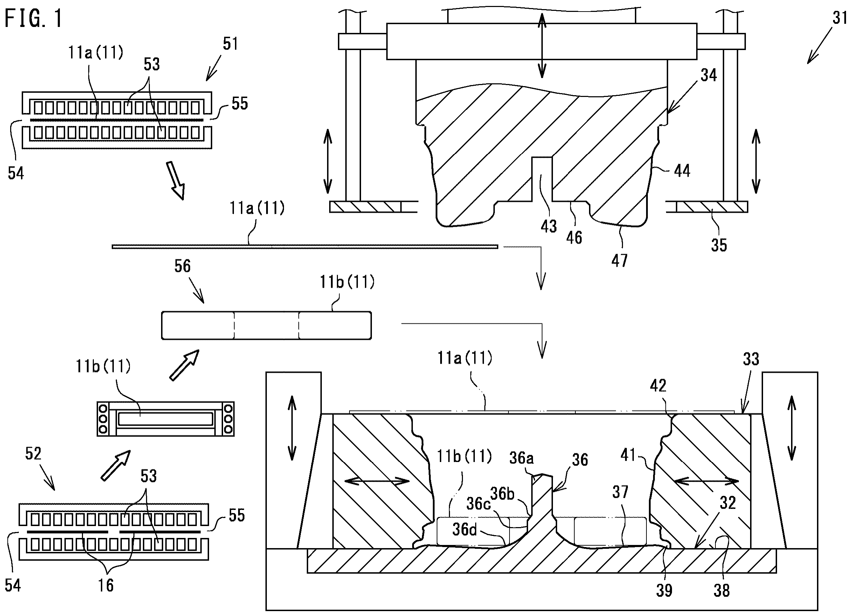

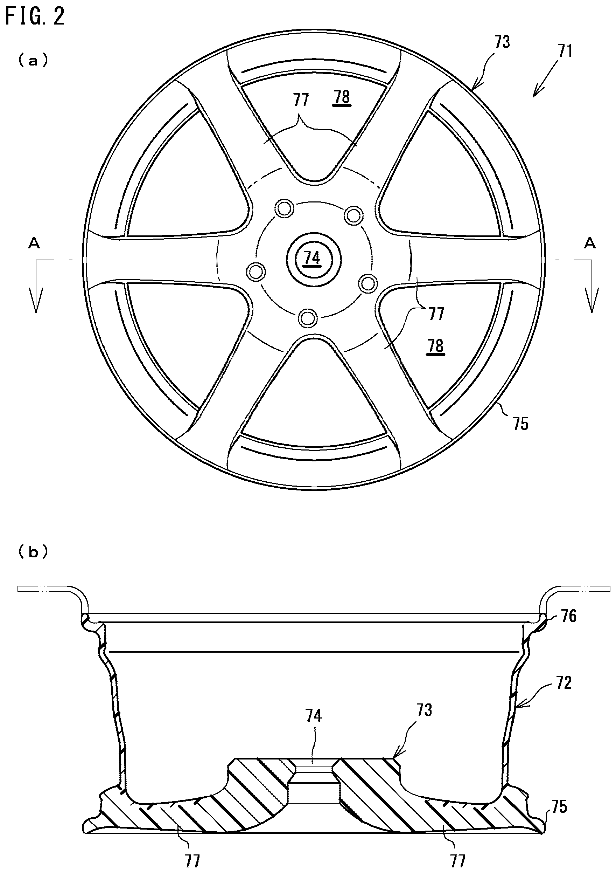

FIG. 1 illustrates an outline of a main part of an automobile wheel manufacturing method. In this manufacturing method, a prepared material 11 is heated and then formed with a mold 31 to obtain a wheel-shaped formed product. Thereafter, the formed product taken out of the mold 31 is subjected to post-processing such as cutting to obtain an intermediate product 71 (hereinafter, also referred to as "wheel 71") of the wheel as illustrated in FIG. 2.

First, the material 11 will be described.

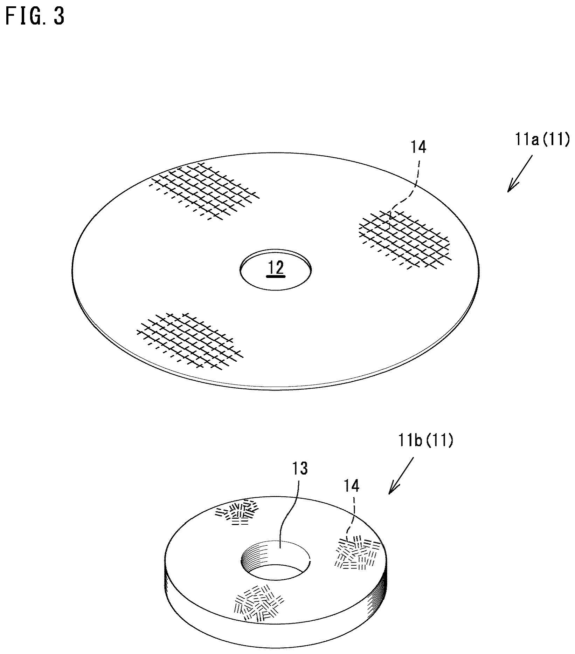

As the material 11, materials having two types of shapes as illustrated in FIG. 3 are used. One is a sheet-shaped material and the other is billet-shaped or bulk-shaped material.

The sheet-shaped material 11 (sheet-shaped material 11a) mainly constitutes a rim portion 72 of the wheel 71, has a thickness equal to or larger than the thickness of the rim portion 72, and is formed in a disc shape expanding in the planar direction. A through hole 12 penetrating in the thickness direction is formed at the center of the surface. In the forming, deep draw forming is performed. The through hole 12 may have other shapes in addition to a circular shape as in the illustrated example.

The sheet-shaped material 11a is formed of one sheet material, or may be formed by laminating a plurality of sheet materials.

The billet-shaped or bulk-shaped material 11 (billet-shaped material 11b) mainly constitutes a disc portion 73 of the wheel 71, and is a mass sized appropriately for compression forming, or a shape having a predetermined size, volume, and bulk. Specifically, the billet-shaped or bulk-shaped material 11 is formed in a short cylindrical shape having a predetermined thickness and a predetermined diameter depending on the cavity of the mold and having a through hole 13 at the center. In the forming, compression forming is performed. The through hole 13 may also have other shapes in addition to a circular shape as in the illustrated example.

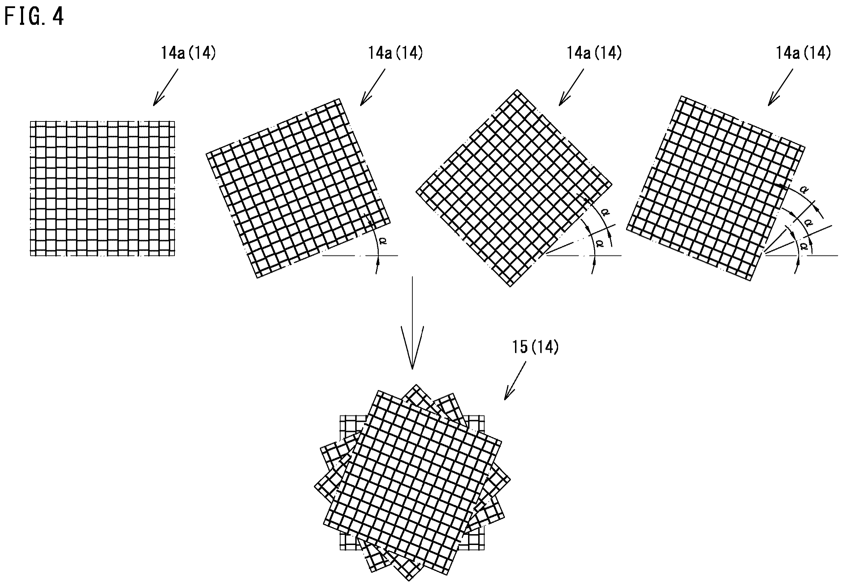

As the reinforced fiber 14 of the material 11, a reinforced fiber having a chopped material (chopped fiber), a chopped sheet, a continuous fiber cloth (woven fabric) sheet, or the like can be used, and as the fibers, a material having carbon fiber or glass fiber can be suitably used. In particular, as the sheet-shaped material 11a, a chopped material or a chopped sheet can be used, but it is preferable to use a material having the continuous fiber as the reinforced fiber 14. A continuous fiber cloth sheet is more preferable. In consideration of shear deformation, fiber displacement, and the like of the fabric structure during deep draw forming, as illustrated in FIG. 4, it is preferable to form, as the reinforced fiber 14, the continuous fiber laminate pseudo isotropic cloth sheet 15 in which the continuous fiber cloth sheet 14a is laminated while changing the directivity by a certain angle α to enhance the strength and the isotropy of deformation. In the example of FIG. 4, a required number of continuous fiber cloth sheets 14a composed of warps and wefts are laminated while being rotated by 22.5 degrees to form a continuous fiber laminate pseudo isotropic cloth sheet 15.

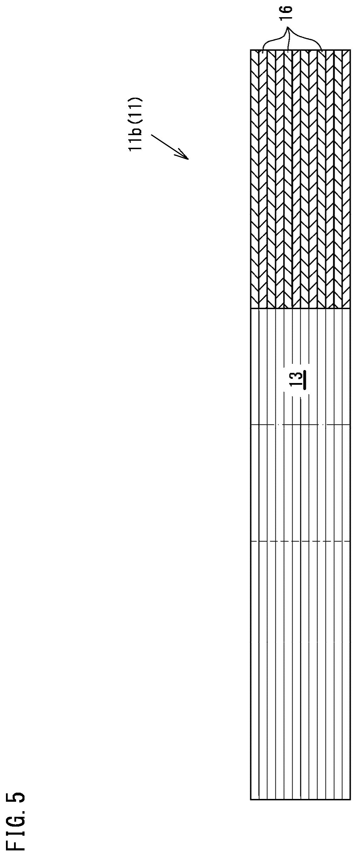

In consideration of formability during compression forming, the billet-shaped material 11b is a pseudo isotropic material having, as the reinforced fiber 14, a chopped material (chopped fiber) or a chopped sheet. In consideration of the rigidity in addition to the formability of the formed product, it is more preferable to stack a plurality of SMCs 16, which are pseudo isotropic random sheet materials having chopped sheets as the reinforced fibers 14, in the thickness direction thereof to form the billet-shaped material 11b as illustrated in FIG. 5. The thickness direction of the SMCs 16 is a compression direction during compression forming.

The resin matrices of the sheet-shaped material 11a and the billet-shaped material 11b are only required to be compatible materials that are mixed with each other, and generally the same resin is used. As the resin, for example, a thermoplastic epoxy resin, polyamide, or the like can be used.

Next, a device used in the manufacturing method will be described.

In the manufacturing method, the billet-shaped material 11b and the sheet-shaped material 11a are heated to a temperature higher than the melting point of the resin matrix which is a constituent element of the billet-shaped material and the sheet-shaped material, and then formed at a high speed by the mold 31 set to a temperature lower than the melting point of the resin matrix.

Therefore, as illustrated in FIG. 1, the device includes, in addition to the mold 31 for forming, heating devices 51 and 52 for heating the sheet-shaped material 11a and the billet-shaped material 11b. As the heating devices 51 and 52, an appropriate heating type device can be used, but an infrared (IR) heating type device is preferably used from the viewpoint of performing ideal heating without uneven heating inside and outside in a short time.

The heating device 51 that heats the sheet-shaped material 11a has heaters 53 on upper and lower sides, and has a carry-in port 54 serving as an inlet to a conveyance path between the heaters 53 and a carry-out port 55 serving as an outlet. Carrying-in and carrying-out of the sheet-shaped material 11a are performed by an automatic conveying device.

A heating device 52 that heats the billet-shaped material 11b is the same as the heating device 51 for the sheet-shaped material 11a. A plurality of sheet materials (SMCs 16) that are stacked to form a billet shape are heated while being conveyed. A subsequent stage of the heating device 52 is provided with a heat retention pot 56. The heat retention pot 56 accommodates billet-shaped material 11b formed by laminating sheet materials (SMCs 16) to achieve heat equalization.

The heating temperature of the sheet-shaped material 11a and the billet-shaped material 11b is higher than the melting point of their resin matrices. When the resin matrix is, for example, polyamide, the resin matrix is preferably heated to about 280°C. This temperature is a value higher than the melting point by about 30°C to 70°C in consideration of temperature decrease during forming.

The mold 31 for forming includes a disc outer surface mold 32, a rim outer diameter mold 33, and a punch mold 34. The disc outer surface mold 32 mainly forms, as a lower mold, an outer surface of the disc portion 73 of the wheel 71. The rim outer diameter mold 33 moves in a radial direction on the upper surface of the disc outer surface mold 32 to form the outer peripheral surface of the rim portion 72 of the wheel 71, and is divided into a plurality of parts in a circumferential direction. The punch mold 34 mainly forms, as an upper mold, an inner peripheral surface of the rim portion 72 and an inner surface of the disc portion 73, and is supported so as to be vertically movable from a side of the rim outer diameter mold 33 opposite to the disc outer surface mold 32 toward the disc outer surface mold 32.

A wrinkle suppression plate 35 that moves up and down similarly to the punch mold 34 is provided above the rim outer diameter mold 33 in a closed state. The wrinkle suppression plate 35 suppresses generation of wrinkles in the sheet-shaped material 11a in deep draw forming by pressing the outer peripheral portion of the sheet-shaped material 11a placed on an upper surface of the rim outer diameter mold 33 while allowing the outer peripheral portion of the sheet-shaped material 11a to be drawn.

The structure of the mold 31 will be described. Note that examples of the wheel 71 include wheels with various shapes in which the outer surface shape of the disc is expanded, flat, recessed or the like, such as, for example, inset, zero setting, and outset depending on the distance from the center line of the wheel (rim width) to the mounting surface. The shape of the mold 31 also varies depending on the wheel shape, and the mold 31 in the illustrated example shows one example. The manufacturing method of the present invention is not limited to the illustrated shape.

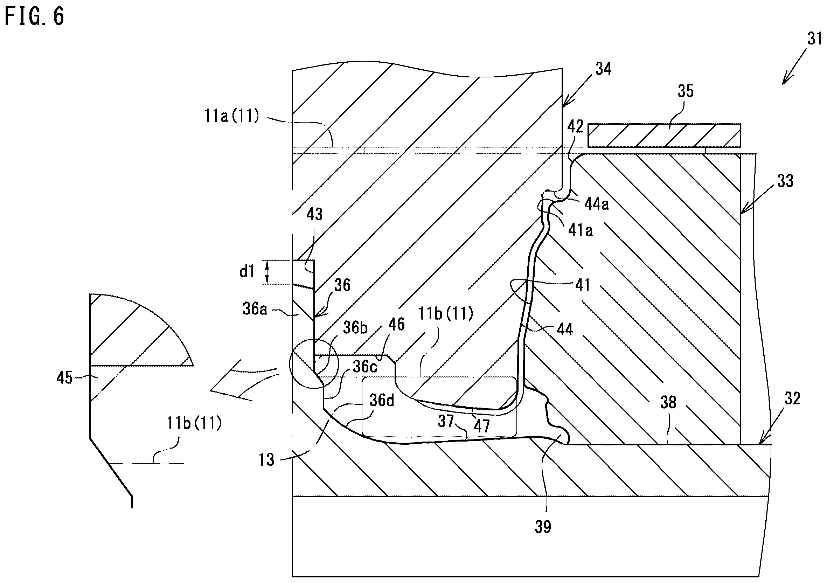

As illustrated in FIGS. 1 and 6, the disc outer surface mold 32 has a substantially flat plate shape, and a shaft portion 36 facing vertically upward is formed at the center. The shaft portion 36 is located at a position corresponding to a center bore 74 of the wheel 71, and an undulating surface 37 corresponding to the outer surface of the disc portion 73 is provided on the entire circumference of the shaft portion 36. A portion on the outer peripheral side thereof is a support surface 38 that supports the rim outer diameter mold 33.

A tip side portion of the shaft portion 36 is a fitting portion 36a to be fitted with the punch mold 34, and is formed to be thinnest in the shaft portion 36. A large diameter portion 36c is formed below the fitting portion 36a via a step portion 36b. The diameter of the large diameter portion 36c is smaller than the diameter of the through hole 13 of the billet-shaped material 11b. The large diameter portion 36c has an inclined shape portion 36d having a larger diameter toward the lower side like a mountain skirt at a root portion, that is, a lower end outer periphery. The diameter of the lower end position of the inclined shape portion 36d is larger than the diameter of the through hole 13 of the billet-shaped material 11b.

The rim outer diameter mold 33 has, at the lower end, a recess 39 forming a portion where an outer portion of a tire is assembled from an outer flange 75 of the wheel 71. An uneven portion 41 that moves in and out along the shape of the rim portion 72 is formed above the recess 39, and a corner radius portion 42 is formed at an upper end of the wheel 71 above a portion 41a forming an inner flange 76.

The wrinkle suppression plate 35 presses the upper surface of the rim outer diameter mold 33, that is, an outer peripheral portion of the corner radius portion 42, and has a plate shape, and is formed in an annular shape as a whole.

The punch mold 34 has a fitting recess 43 which is fitted to the fitting portion 36a of the shaft portion 36 in the disc outer surface mold 32 at the center of the lower surface. In addition, the punch mold has an outer peripheral surface 44 having a shape that is fitted with the inside of the rim outer diameter mold 33 in a closed state, at a distance of a gap corresponding to the thickness of the rim portion 72. In the outer peripheral surface 44, a portion 44a forming the inner flange 76 of the wheel 71 is particularly formed to create a forming space having a desired shape in consideration of mechanical performance with a corresponding portion of the rim outer diameter mold 33.

The depth of the fitting recess 43 is set such that a gap d1 is created between the bottom of the fitting recess 43 and the tip of the shaft portion 36 at the bottom dead center of the punch mold 34. In addition, the dimensions around the shaft portion 36 are designed so that a relief portion 45 that the billet-shaped material 11b does not reach when the punch mold 34 reaches the bottom dead center can be formed in the vicinity of the mouth edge of the fitting recess 43.

A portion on the outer peripheral side of the fitting recess 43 is an annular recess portion 46 that forms a portion on the outer peripheral side of a center bore 74 of the wheel 71, and a portion on the outer peripheral side of the annular recess portion 46 is a protruding portion 47 that forms a portion corresponding to a spoke 77 of the wheel 71 and a window portion 78 between the spokes 77. The protruding portion 47 protrudes downward from the annular recess portion 46. A portion of the protruding portion 47 corresponding to the window portion 78 is formed to have a reduced thickness after forming with the undulating surface 37 of the disc outer surface mold 32.

The mold 31 like this includes a temperature adjustment mechanism (not illustrated) that adjusts the temperature of the mold 31 to be constant. The temperature adjustment mechanism is configured by providing a flow path through which a medium such as water flows, and is configured to maintain a predetermined temperature by monitoring and adjusting a flow rate and a temperature of the medium. The temperature adjustment mechanism can also be configured by inserting a cartridge heater into the mold 31.

The temperature of the mold 31 is lower than the melting points of the resin matrices of the sheet-shaped material 11a and the billet-shaped material 11b, and preferably lower than the glass-transition temperature. When the resin matrix is a thermoplastic epoxy resin, the temperature may be specifically 100°C to 130°C, particularly 120°C or lower, and may be 80°C or lower or about 50°C. As long as the temperature is equal to or more than a required constant temperature, a lower temperature is preferable, which can suppress adhesion of the resin matrix to the mold 31 and shorten the holding time to further shorten the cycle time.

The device as described above manufactures the wheel 71 by performing the following forming on the sheet-shaped material 11a and the billet-shaped material 11b described above.

The mold 31 is closed, and its temperature is set to a predetermined temperature lower than the melting point of the resin matrix of the material.

On the other hand, the thermoplastic fiber-reinforced resin is cut with a water jet or the like to prepare the sheet-shaped material 11a and the sheet materials (SMCs 16) for constituting the billet-shaped material 11b. These materials are heated to a predetermined temperature by heating devices 51 and 52, and as for the billet-shaped material 11b, the heated sheet materials (SMCs 16) are laminated and subjected to heat equalization in the heat retention pot 56.

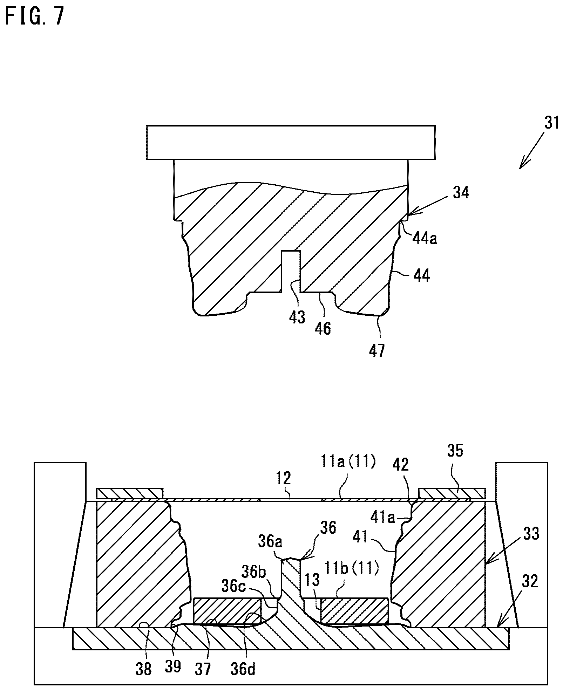

Then, the punch mold 34 is raised to open the mold 31, and the billet-shaped material 11b is put into the mold 31 as illustrated in FIG. 7. At this time, the shaft portion 36 of the disc outer surface mold 32 and the inclined shape portion 36d align the center of the billet-shaped material 11b and the center of the disc outer surface mold 32.

Immediately thereafter, the sheet-shaped material 11a is placed on the upper surface of the rim outer diameter mold 33, and the wrinkle suppression plate 35 is lowered to press the outer peripheral portion of the sheet-shaped material 11a. The wrinkle suppression plate 35 is heated and kept at a temperature lower than that of the sheet-shaped material.

At this time, since the temperature of the mold 31 is lower than the heating temperatures of the sheet-shaped material 11a and the billet-shaped material 11b, the temperatures of the sheet-shaped material 11a and the billet-shaped material 11b that decrease in temperature after coming out of the heating device 51 and the heat retention pot 56 further decrease.

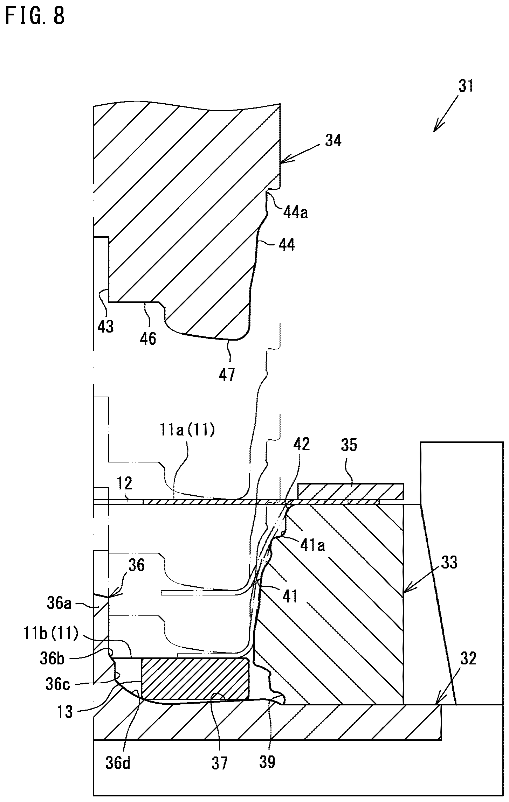

When the punch mold 34 is lowered as illustrated in FIG. 8 immediately after the sheet-shaped material 11a and the billet-shaped material 11b are set in the mold 31, high-speed forming can be performed. That is, when the punch mold 34 is lowered, the lower end of the protruding portion 47 first abuts on the upper surface of the sheet-shaped material 11a, and the abutted portion is pushed down. As the punch mold 34 is lowered, the sheet-shaped material 11a is drawn into the mold 31 and is subjected to deep draw forming, and the rim portion 72 is gradually formed along the rim outer diameter mold 33 and the punch mold 34. At this time, the rim portion 72 is cooled and solidification proceeds.

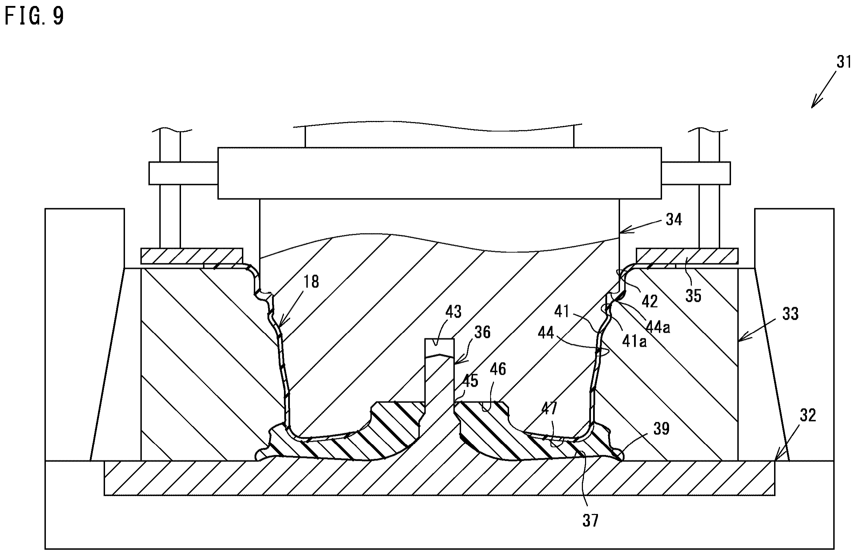

The inner peripheral side portion of the sheet-shaped material 11a pushed down to the lower end of the protruding portion 47 comes into contact with the upper surface of the billet-shaped material 11b from above, and is pressed against the billet-shaped material 11b by the punch mold 34. As a result, the sheet-shaped material 11a and the billet-shaped material 11b are continuously further deformed while being joined and integrated with each other, and when the punch mold 34 reaches the bottom dead center, desired forming of the sheet-shaped material 11a and the billet-shaped material 11b is completed as illustrated in FIG. 9.

At this time, the tip of the shaft portion 36 of the disc outer surface mold 32 and the bottom of the fitting recess 43 of the punch mold 34 are not in contact with each other, which creates a space where the billet-shaped material 11b subjected to compression forming does not reach the vicinity of the mouth edge of the fitting recess 43, that is, the relief portion 45. Therefore, although the formation load increases particularly after the sheet-shaped material 11a comes into contact with the billet-shaped material 11b, it is possible to avoid an extreme increase in the formation load.

Such forming by the mold 31 can be performed in less than one minute even if the formed product is held at the bottom dead center for 15 seconds although it depends on the size of the formed product. Moreover, the holding of the material 11 with respect to the mold 31 can be simply and quickly performed unlike the work of strictly arranging many materials. Thus, the forming operation including removal of the formed product can be performed within one minute.

The formed product taken out of the mold 31 is cooled by being left at normal temperature or the like, and then subjected to post-processing such as cutting of an extra portion such as, for example, a portion protruding from the inner flange 76 or the window portion 78, to form the wheel 71 (see FIG. 2).

As described above, in the forming using the mold 31, the sheet-shaped material 11a is subjected to deep draw forming, the billet-shaped material 11b is subjected to compression forming, and the sheet-shaped material and the billet-shaped material are joined to each other in the forming process. Moreover, since the sheet-shaped material 11a is formed into a tubular shape by pushing down the portion on the inner peripheral side, a desired rim portion 72 can be obtained without difficulty, and the rim portion 72 can be widened. In the billet-shaped material 11b, only the disc portion 73 is formed, and it is not necessary to form the rim portion 72, so that an excessive volume and a formation load are unnecessary. Regarding the formation load, since the relief portion 45 is created, a rapid increase can be reliably prevented.

Such molding is, so to speak, organic combination of deep draw forming of the sheet-shaped material 11a and compression forming of the billet-shaped material 11b, and is for reasonably forming, joining, and integrating the rim portion 72 and the disc portion 73 in a series of operations. Therefore, the wheel 71 can be formed in a very short time at a minute level, and the formability is good. Moreover, since the sheet-shaped material 11a and the billet-shaped material 11b are formed in a low-stress manner matching their shapes, it is easy to control the flow of the material at the time of forming. The mechanical performance of the wheel can be secured by suppressing the reinforced fiber 14 from excessively enhancing the anisotropy.

In addition, since there is no excessive deformation during forming and it is easy to control the flow of the material, it is possible to partially perform reinforcement and the like, thereby obtaining sufficient mechanical performance.

For example, in forming, in order to particularly make the thickness of a portion corresponding to the inner flange 76 of the rim portion 72 thicker than those of other portions of the rim portion 72 or to improve strength, the following is performed.

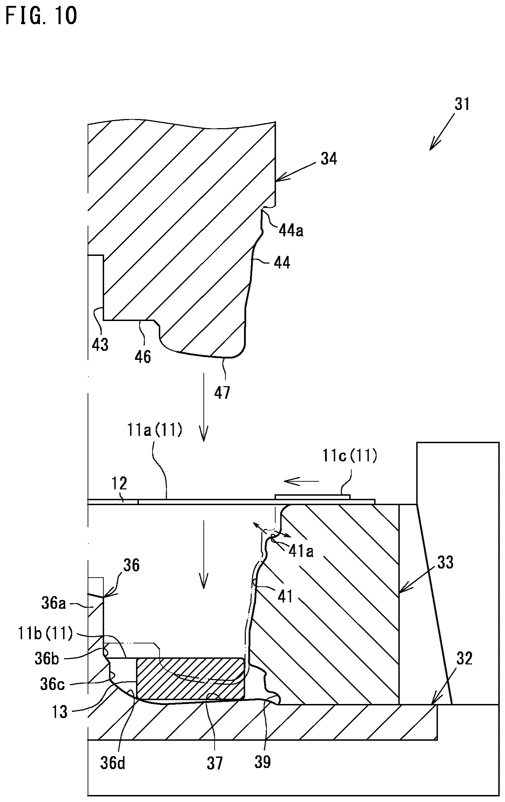

That is, as illustrated in FIG. 10, the sheet-shaped material 11a with an additional sheet-shaped material 11c laminated on a part of the sheet-shaped material 11a is used. As the additional sheet-shaped material 11c, a material having a chopped material as a reinforced fiber, a material having a continuous fiber cloth sheet 14a and a continuous fiber laminate pseudo isotropic cloth sheet 15, or the like can be used depending on the purpose. In order to increase the strength, it is preferable to use a fiber-reinforced resin sheet having a continuous fiber cloth sheet as the additional sheet-shaped material 11c. Note that in FIG. 10, illustration of the wrinkle suppression plate 35 is omitted for convenience.

The additional sheet-shaped material 11c is formed in an annular shape having an appropriate width. The lamination position is set to a position of the upper surface of the sheet-shaped material 11a to be moved to a portion where the thickness or rigidity and strength are to be higher than those of other portions after forming due to deformation during deep draw forming, which means, for example, the portion 41a forming the inner flange 76. The additional sheet-shaped material 11c can be laminated not only on the upper surface of the sheet-shaped material 11a but also inside the sheet-shaped material 11a, that is, between sheets constituting the sheet-shaped material 11a, or on the lower surface of the sheet-shaped material 11a.

When formed using such sheet-shaped material 11a, the additional sheet-shaped material 11c laminated is subjected to deep draw forming while being drawn integrally with the sheet-shaped material 11a, and reaches the portion 41a forming the inner flange 76. Then, the material flows as indicated by an arrow, and is formed into a desired final shape to be thick. Therefore, even if the inner flange 76 portion has a thickness larger than that of the other portion, it can be sufficiently formed, and when the additional sheet-shaped material 11c has a continuous fiber cloth sheet, rigidity and strength can be improved by laminating the sheet-shaped materials 11a, 11c.

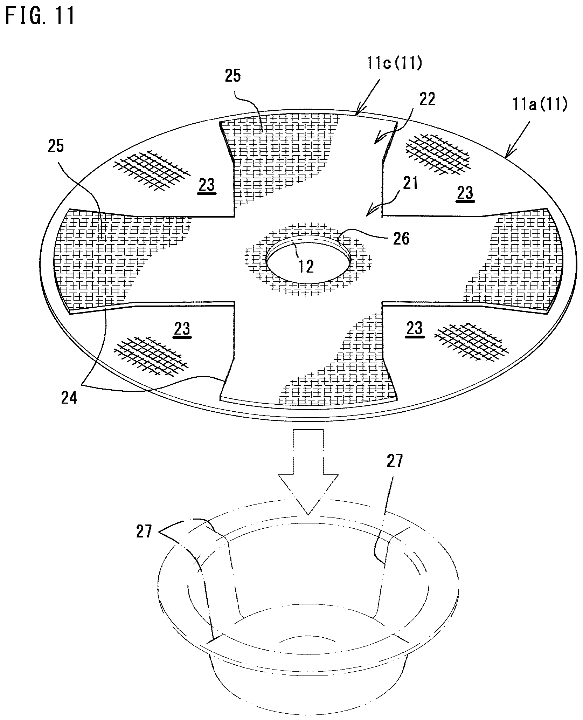

FIG. 11 illustrates another example of the additional sheet-shaped material 11c. The additional sheet-shaped material 11c is for reducing a change in orientation of fibers during deep draw forming and improving strength in a circumferential direction and a width direction.

That is, the additional sheet-shaped material 11c is a sheet material having a continuous fiber cloth sheet as a reinforced fiber, and a notch 23 having a shape expanding toward the outer peripheral side is formed at a position of 45 degrees with respect to a longitudinal and a lateral direction in which fibers extend in a peripheral edge portion 22 surrounding a central portion 21. Contour lines 24 forming the notch 23 have shapes that are joined to each other during deep draw forming.

Specifically, the additional sheet-shaped material 11c is formed in a size that fits in the disc-shaped sheet-shaped material 11a, and has a shape like petals roughly opened. In other words, a disc-shaped peripheral edge portion has a shape in which notches 23 are formed at equal intervals along a circumferential direction, and has petal-shaped portions 25 divided by the notches 23. A through hole 26 similar to the through hole 12 of the sheet-shaped material 11a is formed at the center.

The notch 23 of the peripheral edge portion 22 is roughly fan-shaped, and has two contour lines radially extending in an outer circumferential direction from a position near a central portion 21 where there is a fan-shaped corner. The arrangement of the notches 23 having such a shape is, assuming that a longitudinal and a lateral direction in which the fiber extends are north to south and east to west, at positions therebetween, that is, positions of northeast, southeast, southwest, and northwest. The two opposing contour lines 24 forming the four notches 23 are formed depending on the shape of the rim so as to be joined to each other, that is, butted against or overlapped with each other during deep draw forming.

When such additional sheet-shaped material 11c is overlapped and formed on the sheet-shaped material 11a, the additional sheet-shaped material 11c laminated is subjected to deep draw forming while being drawn integrally with the sheet-shaped material 11a. At this time, the petal-shaped portions 25 divided by the notches 23 in the additional sheet-shaped material 11c approach each other, the contour lines 24 are joined to each other, and the joined portions are pressed by the surrounding materials to ensure strength. In FIG. 11, a reference numeral 27 denotes a joining line where contour lines 24 are joined to each other.

The fibers of the continuous fiber cloth sheet as the reinforced fibers constituting the additional sheet-shaped material 11c extend in a circumferential direction and a width direction to improve the strength in these directions. Since the petal-shaped portion 25 is deformed so as to be folded along the rim outer diameter mold 33 during deep draw forming, the intersection angle of the fibers of the continuous fiber cloth sheet hardly changes. Therefore, high strength can be obtained.

Since there is no complicated and excessive deformation even in the forming of the disc portion 73, the flow of the billet-shaped material 11b can be easily controlled, and sufficient mechanical performance can be partially secured.

For example, when a portion between the spoke 77 of the disc portion 73 and an outer flange 75 is to be reinforced at the time of forming, the following process is performed.

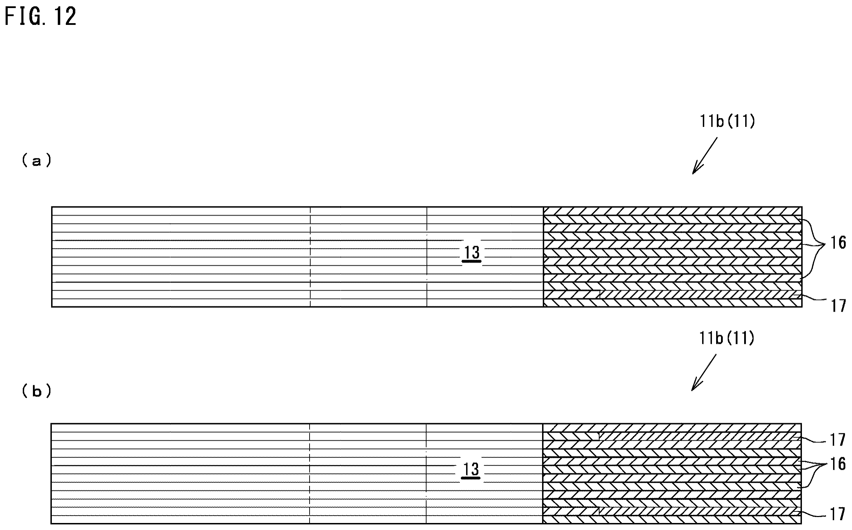

That is, when the billet-shaped material 11b is formed by laminating a plurality of SMCs 16, which are pseudo isotropic random system sheet materials having chopped sheets as the reinforced fiber 14, in the thickness direction thereof, the billet-shaped material 11b including the reinforcing sheets 17 between the SMCs 16 is used as illustrated in FIG. 12. The reinforcing sheet 17 is preferably constituted by a continuous fiber cloth sheet. In addition, for example, one having a braid sheet (quasi-isotropic fabric) such as "QISO" (registered trademark) of A&P technology, Inc. as a reinforced fiber may be used.

The reinforcing sheet 17 has the same thickness as that of the SMC16 and is sandwiched between the SMCs 16.

The reinforcing sheet 17 moves in an outer circumferential direction along with deformation during compression forming of the billet-shaped material 11b, and is located on the outer peripheral side of the billet-shaped material 11b and is divided in a circumferential direction so as to realize such movement.

(a) of FIG. 12 illustrates an example in which the reinforcing sheet 17 is provided on the outer surface side of the disc portion 73, and (b) illustrates an example in which the reinforcing sheet is provided on the inner surface side in addition to the outer surface side.

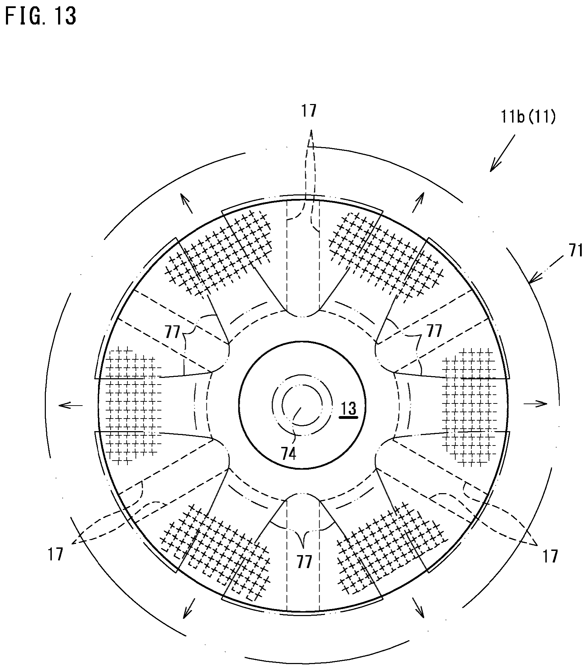

Specifically, the reinforcing sheet of the billet-shaped material 11b is formed in a substantially fan shape as illustrated in FIG. 13, and a plurality of reinforcing sheets 17 are disposed at equal intervals depending on the number of spokes 77. When the billet-shaped material 11b is placed in the mold 31, the orientation in a circumferential direction is determined so that the spoke 77 is formed in a portion having the reinforcing sheet 17. This can be easily performed by providing a structure for restriction between the shaft portion 36 and the through hole 13 of the billet-shaped material 11b because the shaft portion 36 is provided in the disc outer surface mold 32.

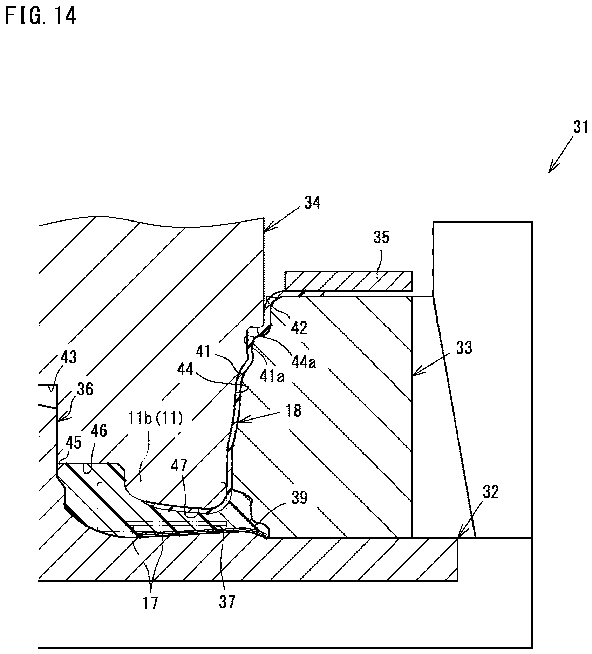

When molding is performed, as illustrated in FIG. 14, the reinforcing sheet 17 moves, when the billet-shaped material 11b is compressed and deformed to spread in an outer circumferential direction and an inner peripheral direction, in an outer circumferential direction to be located between the outer flange 75 and the end portion on the outer peripheral side of the spoke 77. Note that FIG. 14 illustrates an example in which the billet-shaped material 11b illustrated in (a) of FIG. 12 is formed.

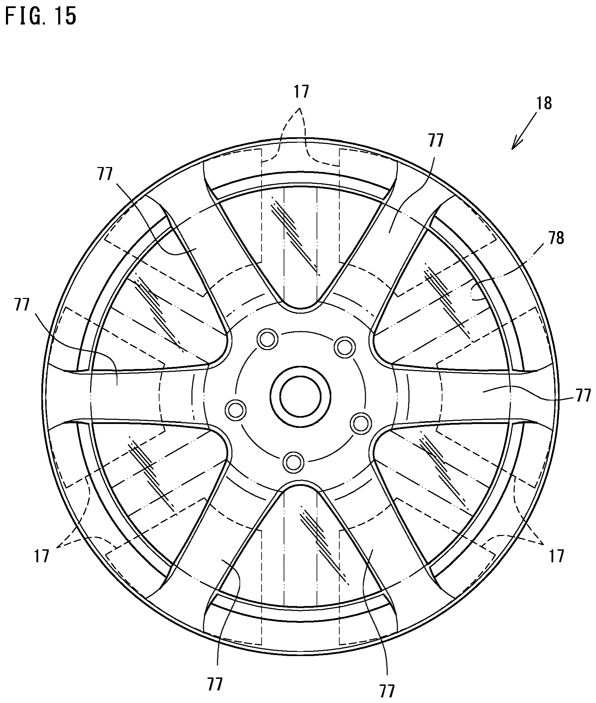

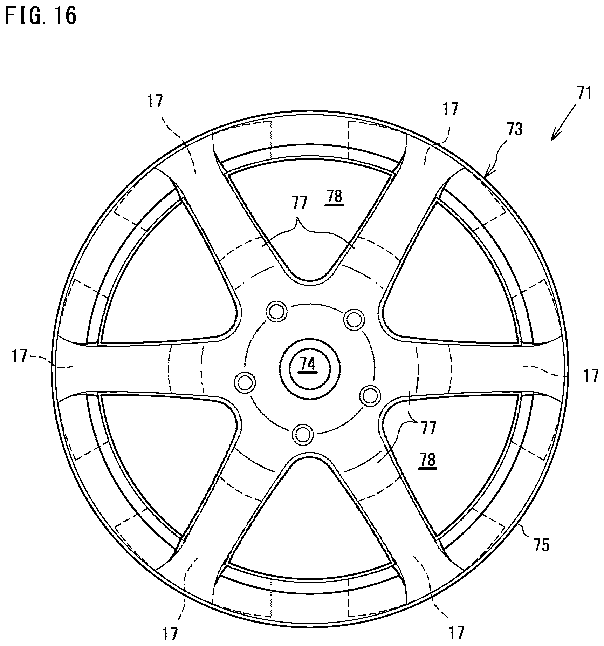

FIG. 15 illustrates a front view of a formed product 18. In post-processing of the formed product 18, a portion corresponding to the window portion 78 including the reinforcing sheet 17 is cut to open the window portion 78. Then, as illustrated in FIG. 16, the reinforcing sheet 17 having a T-shape in front view remains so as to connect the outer flange 75 and the spokes 77, which improves the strength of this portion.

The above configuration is an embodiment for carrying out the present invention, and the present invention is not limited to only the above-described configuration, and other configurations can also be adopted.

For example, in the configuration for build-up or reinforcement of a part of the rim portion 72, reinforcement or the like may be partially performed using a material discontinuous in a circumferential direction, instead of using the above-described annular material as the additional sheet-shaped material 11c. The strength can be enhanced in an aspect in which the additional sheet-shaped material 11c extends long in a rim width direction after forming. Furthermore, the additional sheet-shaped material 11c may have a shape having both a discontinuous portion in a circumferential direction and a continuous portion in a circumferential direction.

Billet-shaped material 11b may include a reinforcing sheet (not illustrated) that is not supposed to move during forming. As the reinforcing sheet, the continuous fiber cloth sheet 14a or the continuous fiber laminate pseudo isotropic cloth sheet 15 can be used. In this case, since it is not premised to move, it is also possible to form an annular shape continuous in a circumferential direction.

In the above-described example, the sheet-shaped material 11a has a disc shape, but the sheet-shaped material 11a may have another shape. For example, similarly to the additional sheet-shaped material 11c exemplified in FIG. 11, the additional sheet-shaped material 11a may have a shape in which notches having contour lines joined to each other are formed during deep draw forming, that is, a shape like petals opened. When the sheet-shaped material 11a having such a shape is used, the additional sheet-shaped material 11c can be omitted. Also in this case, similarly to the continuous fiber laminate pseudo isotropic cloth sheet 15 illustrated in FIG. 4, it is preferable from the viewpoint of strengthening the bonded portion to laminate a plurality of sheet-shaped materials having a shape like petals opened by shifting the directivity by a certain angle at a time, or by 45 degrees in the case of the sheet-shaped material exemplified in FIG. 11.

### Reference Signs List

- 11: material
- 11a: sheet-shaped material
- 11b: billet-shaped material
- 11c: additional sheet-shaped material
- 13: through hole
- 14: reinforced fiber
- 14a: continuous cloth sheet
- 15: continuous fiber laminate cloth sheet
- 16: SMC
- 17: reinforcing sheet
- 31: mold
- 32: disc outer surface mold
- 33: rim outer diameter mold
- 34: punch mold
- 35: wrinkle suppression plate
- 36: shaft portion
- 71: intermediate product of wheel
- 72: rim portion
- 73: disc portion

## Claims

1. A thermoplastic fiber-reinforced resin wheel manufacturing method in which a material made of a thermoplastic fiber-reinforced resin is formed with a mold to manufacture a wheel in which a rim portion and a disc portion are integrated, the thermoplastic fiber-reinforced resin wheel manufacturing method comprising:
setting the mold to a temperature lower than a melting point of a resin matrix which is a constituent element of the material;
heating a billet-shaped material and a sheet-shaped material as the material to a temperature higher than the melting point of the resin matrix which is the constituent element of the material; and
then holding the billet-shaped material in the mold surrounded by a disc outer surface mold and a rim outer diameter mold, and holding the sheet-shaped material on a surface on a side of a punch mold opposite to the disc outer surface mold in the rim outer diameter mold, and pressing an outer peripheral portion of the sheet-shaped material with a wrinkle suppression plate; and
performing deep draw forming for the sheet-shaped material with the punch mold and the rim outer diameter mold to form a rim portion of the wheel, and pressing a part of the sheet-shaped material against the billet-shaped material to join both materials, and performing compression forming for the billet-shaped material with the disc outer surface mold, the rim outer diameter mold, and the punch mold to form a disc portion of the wheel.

2. The thermoplastic fiber-reinforced resin wheel manufacturing method according to claim 1, wherein
the billet-shaped material has a through hole at a center, and
the through hole is fit into and held by a shaft portion provided at a center of the disc outer surface mold.

3. The thermoplastic fiber-reinforced resin wheel manufacturing method according to claim 1 or 2, wherein
a sheet material having a continuous fiber cloth sheet as a reinforced fiber is used as the sheet-shaped material.

4. The thermoplastic fiber-reinforced resin wheel manufacturing method according to claim 1 or 2, wherein
a sheet material having a continuous fiber laminate pseudo isotropic cloth sheet as a reinforced fiber is used as the sheet-shaped material.

5. The thermoplastic fiber-reinforced resin wheel manufacturing method according to claim 1 or 2, wherein
a sheet material having a chopped material as a reinforced fiber is used as the sheet-shaped material.

6. The thermoplastic fiber-reinforced resin wheel manufacturing method according to claim 1 or 2, wherein
as the sheet-shaped material, the sheet-shaped material with an additional sheet-shaped material made of a thermoplastic fiber-reinforced resin laminated on a part of the sheet-shaped material is used, and
the lamination position of the additional sheet-shaped material is set to a position where the additional sheet-shaped material is moved to a position where the thickness or the rigidity and strength are to be higher than those of other portions after forming due to deformation during deep draw forming.

7. The thermoplastic fiber-reinforced resin wheel manufacturing method according to claim 6, wherein
the additional sheet-shaped material is a sheet material having a continuous fiber cloth sheet as a reinforced fiber, and
a notch having a shape that widens toward an outer peripheral side is formed at a position of 45 degrees with respect to a longitudinal and a lateral direction in which fibers extend in a peripheral edge portion surrounding a central portion of the additional sheet-shaped material, and
contour lines forming the notch have shapes that are joined to each other during the deep draw forming.

8. The thermoplastic fiber-reinforced resin wheel manufacturing method according to claim 1 or 2, wherein
as the billet-shaped material, one with a plurality of sheet materials having chopped sheets as a reinforced fiber laminated in a compression direction by the punch mold is used.

9. The thermoplastic fiber-reinforced resin wheel manufacturing method according to claim 8, further comprising:
a reinforcing sheet including a continuous fiber cloth sheet between the sheet materials, and
moving the reinforcing sheet in an outer circumferential direction during compression forming.
